(19) Europäisches Patentamt
European Patent Office
Office européen des brevets

(11) **EP 3 253 959 B1**

(12) **EUROPÄISCHE PATENTSCHRIFT**

(45) Veröffentlichungstag und Bekanntmachung des Hinweises auf die Patenterteilung:
**05.01.2022 Patentblatt 2022/01**

(21) Anmeldenummer: **16704409.8**

(22) Anmeldetag: **04.02.2016**

(51) Int Cl.:
*F02D 41/14* (2006.01)   *F02D 41/00* (2006.01)

(86) Internationale Anmeldenummer:
**PCT/EP2016/052388**

(87) Internationale Veröffentlichungsnummer:
**WO 2016/124690 (11.08.2016 Gazette 2016/32)**

(54) **STEUERUNGSVERFAHREN UND STEUERUNG FÜR EINEN VERBRENNUNGSMOTOR**

CONTROL METHOD AND CONTROLLER FOR AN INTERNAL COMBUSTION ENGINE

PROCÉDÉ DE COMMANDE ET COMMANDE D'UN MOTEUR À COMBUSTION INTERNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.02.2015 DE 102015202135**

(43) Veröffentlichungstag der Anmeldung:
**13.12.2017 Patentblatt 2017/50**

(73) Patentinhaber: **Volkswagen Aktiengesellschaft 38436 Wolfsburg (DE)**

(72) Erfinder:
- **MAZUR, Michael**
  **30519 Hannover (DE)**
- **NITZKE, Hans-Georg**
  **38547 Wolfsburg (DE)**
- **JESCHKE, Jens**
  **38106 Braunschweig (DE)**
- **DOCKHORN, Matthias**
  **38442 Wolfsburg (DE)**

(74) Vertreter: **MFG Patentanwälte Meyer-Wildhagen Meggle-Freund Gerhard PartG mbB Amalienstraße 62 80799 München (DE)**

(56) Entgegenhaltungen:
**AT-A2- 510 328    DE-A1-102006 007 122**

- **Rückert J ; Richert F ET AL: "Ein Modellgestützter Prädiktiver Ansatz zur Regelung von Ladedruck und AGR-Rate beim Nutzfahrzeug-Dieselmotor A Model based Attempt to Control Boost Pressure and EGR-Rate for a Heavy Duty Engine", , 1. Januar 2004 (2004-01-01), Seiten 131-141, XP055265270, Gefunden im Internet: URL:http://www.irt.rwth-aachen.de/fileadmi n/IRT/Download/Veroeffentlichungen/2004/De /ru_AUTOREG04_Ladedruck.pdf [gefunden am 2016-04-13]**

EP 3 253 959 B1

**Beschreibung**

Die vorliegende Erfindung betrifft ein Steuerungsverfahren und eine entsprechende Steuerung für einen Verbrennungsmotor.

Steuerungsverfahren und Steuerungen dienen dazu, im Fahrzeugbereich wichtige Motorfunktionen zu steuern. Insbesondere dienen sie auch dazu, ergänzend zu konstruktiven Maßnahmen wie Brennraumgestaltung und die Beeinflussung der Gemischbildung durch Einspritzsysteme und Einspritzverfahren, im Motorbetrieb den Kraftstoffverbrauch und die damit zusammenhängenden $CO_2$-Emissionen sowie wesentliche Abgaskomponenten wie Kohlenmonoxid (CO), Kohlenwasserstoffe (HC), Stickoxide (NOx) sowie Ruß und Partikel zu senken.

Bekannte Funktionen eines Steuergeräts erhalten Informationen über einen Betriebszustand des Motors (zum Beispiel Drehzahl, Drehmoment, gewünschtes Drehmoment, Temperatur, Ladezustand-DPF (Diesel-Partikelfilter)) und bestimmen Führungsgrößen, welche den Verbrauch und die Emissionen im Betrieb beeinflussen. Zur Bestimmung dieser Führungsgrößen dienen oft ebenfalls im Steuergerät hinterlegte Motorkennfelder, in denen bspw. Soll-Abgasrückführungsraten oder Soll-Ladedruck in Abhängigkeit des oben genannten Betriebszustands hinterlegt sind. Geeignete Führungsgrößen sind zum Beispiel Abgasrückführungsrate, Abgasrückführungsaufteilung, Zylindergasfüllung, Einspritzzeitpunkt, Zündzeitpunkt. Von diesen Führungsgrößen werden dann Stellgrößen abgeleitet (zum Beispiel Drosselklappenstellung, VTG (Variable Turbinengeometrie)).

In der derzeit bei Dieselmotorsteuerungen vorgenommenen Koordination von Stelleingriffen auf das Gassystem des Motors, insbesondere auf die Abgasrückführung (AGR) und Ladedruckregelung, und auf das Einspritzsystem, insbesondere auf den Förderbeginn und die Förderdauer der Kraftstoffzufuhr, bewirkt das Zeitverhalten des Gassystems, dass die Sollwerte der Abgasrückführung- und Ladedruckregelung, insbesondere in dynamischen Übergangsphasen, beispielsweise bei schnellen (d.h. transienten) Änderungen von Drehmoment und Drehzahl der Brennkraftmaschine wie bei einer Beschleunigung, nicht immer wie gewünscht eingestellt werden können.

Aufgrund der bisherigen gesetzlichen Vorgaben für Abgasuntersuchungen bestehen für Pkw nur geringe Anforderungen an die Reduzierung von Schadstoff-Emissionen im dynamischen Betrieb einer Brennkraftmaschine, d.h. einem Betrieb, bei dem dynamische Betriebszyklen gefahren werden, die sich den realistischen Einsatzbedingungen der Brennkraftmaschine annähern.

Bei zukünftigen Testverfahren für die Abgaszulassung werden voraussichtlich zusätzlich zu den Fahrzyklen mit festem Geschwindigkeitsprofil sogenannte Real-Driving-Emissions-Testverfahren eingesetzt werden, bei denen die Geschwindigkeitsprofile vorher nicht bekannt sind und auch dynamische Übergangsphasen eine größere Rolle spielen. Dies hat zur Folge, dass die Schadstoffemissionsauslegung von Antriebskonzepten oder gar Fahrzeugen die Zunahme von transienten Motorbetriebsphasen deutlich mehr berücksichtigen muss.

Aus der deutschen Offenlegungsschrift DE 10 2006 007122 A1 ist ein Verfahren zum Betreiben eines Verbrennungsmotors bekannt, bei dem für einen vorgebbaren NOx-Rohemissionszielwert zugehörige Kombinationen von Motorbetriebsgrößen ermittelt werden. Von diesen Kombinationen wird diejenige ausgewählt, für die sich ein Extremwert für eine zugeordnete Zustandsgröße des Verbrennungsmotors ergibt.

Aus der deutschen Offenlegungsschrift DE 103 21 192 A1 ist ein Steuerungsverfahren für einen Dieselmotor bekannt, bei dem ein dynamischer Betriebszustand des Dieselmotors bewertet und betriebspunktabhängig der Förderoder Einspritzbeginn von Kraftstoff eingestellt wird.

Die deutschen Offenlegungsschrift DE 10 2013 209 037 A1 offenbart ein Verfahren und eine Vorrichtung zum Betrieb einer Abgasrückführung einer selbstzündenden Brennkraftmaschine, insbesondere eines Kraftfahrzeugs. Die Brennkraftmaschine weist ein Luftsystem zur Steuerung der Luftzuführung in wenigstens einen Brennraum der Brennkraftmaschine auf und es ist insbesondere vorgesehen ist, dass ein dynamischer Betriebszustand der Brennkraftmaschine erkannt wird und im Falle eines erkannten dynamischen Betriebszustandes ein Korrektureingriff in das Luftsystem der Brennkraftmaschine durchgeführt wird. In einem erkannten dynamischen bzw. transienten Betrieb der Brennkraftmaschine werden auftretende Emissionsspitzen durch dynamische Anpassung von Führungsgrößen der AGR-Regelung reduziert. Hierzu wird ein dynamisch optimierter Sollwert aus einem betriebsart- und/oder betriebspunktabhängigen Gewichtungsfaktor und aus Min/Max-Werten der Luftmasse bzw. AGR-Rate berechnet. Der Gewichtungsfaktor ermöglicht insbesondere eine auf die jeweilige Applikation und den Betriebszustand des Motors abgestimmte, stufenlose Verschiebung der Emissionen zwischen den Eckwerten NOx-lastig, Kompromiss, Partikel-lastig.

Mit der Führungsgröße Frischluftmenge alleine, wie sie in der DE 10 2013 209 037 A1 beschrieben wird, ist jedoch beispielsweise eine gleichzeitige Optimierung von beiden Emissionen nicht möglich.

Da die Betriebspunkte bei zukünftigen Testverfahren zufällig/variabel abgefahren werden, können die Verbrauchs- und Emissionswerte (l/100km bzw. mg/km) teilweise erheblich nach unten oder oben abweichen. Eine globale Optimierung von bspw. Kraftstoffverbrauch oder CO2-Emissionen bei Nichtüberschreiten von Emissionsgrenzen ist durch die bekannten Steuerstrategien somit nicht mehr gegeben.

Eine feste Zuordnung von Führungsgrößen und Zielgrößen ist zudem nachteilig, da keine optimalen Ergebnisse erzielt werden. Auch ist es nachteilig, bei der Steuerung lediglich eine Zielgröße individuell zu verbessern

Es besteht also die Aufgabe, ein Steuerverfahren und ein Steuergerät für einen Verbrennungsmotor bereitzustellen, welche die oben geschilderten Probleme wenigstens teilweise lösen kann und ein verbessertes Emissionsverhalten auch in dynamischen Übergangsphasen eines Dieselmotors aufweist.

Diese Aufgabe wird durch das erfindungsgemäße Steuerverfahren nach Anspruch 1 und die entsprechende Steuerung für einen Verbrennungsmotor nach Anspruch 10 gelöst.

Weitere vorteilhafte Ausgestaltungen der Erfindung ergeben sich aus den Unteransprüchen und der folgenden Beschreibung bevorzugter Ausführungsbeispiele der vorliegenden Erfindung.

Im Folgenden werden Ausführungsbeispiele eines Verfahrens zur dynamischen Steuerung von wenigstens einer Führungsgröße eines Verbrennungsmotors beschrieben, bei dem ein Stellbereich der Führungsgrößen ermittelt wird. Bei den Führungsgrößen kann es sich beispielsweise um die Abgasrückführungsrate (AGR-Rate), den Rail-Druck, die Verbrennungslage, die AGR-Aufteilung (Hochdruck/Niederdruck), oder dergleichen handeln. Der Stellbereich der Führungsgrößen umfasst für jede Führungsgröße einen Stellbereich, welcher das mögliche Stellpotenzial der jeweiligen Führungsgröße abschätzt.

In dem ermittelten Stellbereich der Führungsgrößen erfolgt eine Zielgrößenbewertung. Das Steuerungsverfahren ermöglicht eine parametrierbare Optimierung der dynamisch entstehenden Emissionen. Zielgrößen können beispielsweise die NOx-Emission oder die Ruß-Emission (Opazität) sein. Es kann so ermöglicht werden, den Verbrennungsprozess in dynamischen Phasen durch die richtige Wahl und Anpassung der Führungsgrößen so zu beeinflussen, dass mehrere Emissionsgrößen gleichzeitig reduziert werden. Dies ist besonders vorteilhaft, wenn mindestens zwei Führungsgrößen zur Verfügung stehen, die das physikalische Potenzial haben die gewünschten Zielgrößen zu reduzieren. Steht nur eine Führungsgröße zur Verfügung, die zwei Zielgrößen reduzieren kann, so ist es gemäß der unten beschriebenen Ausführungsbeispiele möglich, je nach Wahl von Gewichtungen die eine oder die andere Zielgröße zu reduzieren. Außerdem kann auch sichergestellt werden, dass der motorische Betrieb hinsichtlich der anderen relevanten Führungsgrößen nicht nachteilig beeinflusst wird. Das Steuerverfahren hat ferner den Vorteil, dass die Führungsgrößen aber auch die Nutzung von Abgasnachbehandlungssystemen wie beispielsweise Dieselpartikelfilter und Stickoxidspeicherkatalysator (SCR) oder eine Drehmomentenaufteilung in Hybridfahrzeugen im Hinblick auf den Kraftstoff- und Ad-Blue-Verbrauch sowie die Emissionsgrößen zu optimieren. Dies kann insbesondere bei Real-Driving-Emissions-Testverfahren von Vorteil sein.

Das Steuerungsverfahren kann so eingerichtet sein, dass die dynamische Führung gemäß eines Aktivierungskriteriums nur in einem dynamischen Betrieb des Verbrennungsmotors wirkt. Die Aktivierung kann über den Fahrerwunsch und über die jeweils aktive Betriebsart erfolgen. Das Aktivierungskriterium kann beispielsweise auf einer Änderung des Drehmoments des Verbrennungsmotors beruhen. Auf Grundlage eines Aktivierungskriteriums kann entschieden werden, ob die Steuerung eine dynamischen Betriebsstrategie verfolgt, gemäß welcher die Führungsgrößen dynamisch geführt werden, oder eine statische Betriebsstrategie verfolgt, bei der die Sollwerte der Führungsgrößen nicht dynamisch geändert werden. Damit wird gewährleistet, dass die Software dynamisch und nur in emissionsrelevanten Betriebszuständen aktiviert wird. Bei Abgasnachbehandlungsbetriebsarten kann der Systemfokus aber auch anderes gewählt werden, ohne auf eine Aktivierung abzustellen.

Gemäß der Erfindung wird der Stellbereich der Führungsgrößen prädiziert. Die Prädiktion kann beispielsweise das Ermitteln des parametrisierbare Wertebereichs der Sollwerte der Führungsgrößen umfassen, um prädiktiv einen parametrisierbaren Wertebereich aufzuspannen, welcher mögliche Sollwerte der Führungsgrößen umfasst. Mögliche Sollwerte einer Führungsgröße sind beispielsweise solche Sollwerte, die von der Motorsteuerung in einem vorgegebenen Zeitraum ausgehend vom Istzustand der Führungsgröße erreichbar sind. Der parametrisierbare Wertebereich der Sollwerte der Führungsgrößen wird dann durch die jeweiligen Wertebereiche der einzelnen Führungsgrößen aufgespannt. Das Ermitteln der parametrisierbaren Wertebereiche kann beispielsweise erfolgen, indem für jede Führungsgröße unabhängig ein Wertebereich ermittelt wird.

In einem bevorzugten Ausführungsbeispiel des Steuerverfahrens wird der parametrisierbare Wertebereich der Sollwerte der Führungsgrößen durch Anwendung eines Prädiktionsmodells, beispielsweise eines linearen Modells ermittelt. Die Verwendung eines linearen Modells hat den Vorteil, dass eine Entwicklung einer Führungsgröße insbesondere auf kurzen Zeitskalen mit einfachen Mitteln vorhergesagt werden kann. Alternativ können auch komplexere Prädiktionsmodelle verwendet werden. In die Ermittlung des parametrisierbaren Wertebereichs kann Empirik, Kennfelder oder dergleichen einfließen. Beispielsweise kann auf Basis eines numerischen Modells und Differenzialgleichungen mithilfe von vergangenen Funktionswerten sowie deren Ableitungen zukünftige Funktionswerte abgeschätzt werden. Hierbei kann beispielsweise das Verfahren nach Adams-Bashforth eingesetzt werden. Als weiteres alternatives Verfahren zur Prädiktion der Stellbereiche der Führungsgrößen kann auch die physikalisch basierte Prädiktion dienen. Hierbei kann man die für die Führungsgrößen zugrunde liegenden Modelle und Beschreibungen aber auch die Regler in ein Simulationsmodell verschalten und dieses in die Zukunft rechnen lassen.

Auf Basis der Zielgrößenbewertung erfolgt eine Optimierung der Führungsgrößen. Vorzugsweise wird eine Optimierungsfunktion gebildet, die alle betrachteten Zielgrößenbewertungen berücksichtigt. Damit bei einer Vielzahl von Zielgrößen ein eindeutiges Ergebnis bestimmt werden kann, kann eine Zielgrößengewichtung definiert werden.

Gemäß einer Ausführungsform der Optimierung erfolgt für jede Zielgröße eine individuelle Optimierung.

Bevorzugt erfolgt die Optimierung für mehrere Führungsgrößen gleichzeitig. In einer bevorzugten Ausführungsform wird die Definition der Zielgrößengewichtung erweitert und es werden globale Optimierungsziele formuliert. Dies hat den Vorteil, dass die Steuerung mit einer Vielzahl von Führungsgrößen arbeiten kann.

Eine Optimierung mehrerer Führungsgrößen hat beispielsweise den Vorteil, dass eine unkritische Ist-Emissionsgröße durch eine Veränderung von Führungsgrößen so weit erhöht werden kann, dass eine kritische Ist-Emissionsgröße so weit verringert werden kann, dass sichergestellt wird, dass das Emissionsgrenzniveau einer Emissionsgröße für die kritische Emissionsgröße nicht erreicht oder in einem Zeitraum nicht überschritten wird. Verwendet man zwei Führungsgrößen so ist es beispielsweise möglich, eine Emissionsgröße zu reduzieren wobei eine andere auf einem konstanten Niveau bleibt. Es kann bei Verwendung von zwei Führungsgrößen aber auch möglich werden, eine gleichzeitige Reduktion von zwei Emissionsgrößen zu erreichen.

Das Steuerverfahren ist beispielsweise vorteilhaft, wenn bei konkurrierenden Emissionsgrößen, wie sie in einem Dieselmotor, bei den Ruß(partikel)emissionen und den Stickoxidemissionen auftreten, Situationen auftreten, bei denen beispielsweise in einem Geschwindigkeitsprofil die zulässigen Stickoxidemissionen überschritten werden und die zulässigen Rußemissionen deutlich unterschritten werden. Eine Führungsgröße kann beispielsweise dazu verwendet werden, um in unterschiedlichen Arbeitspunkten bzw. Arbeitspunktbereichen unterschiedliche Zielgrößen zu beeinflussen.

In einer vorteilhaften Ausgestaltung wird auf Basis der jeweiligen Zielgrößenbewertung eine Optimierungsfunktion für jede Zielgröße formuliert und die jeweiligen Optimierungsfunktionen werden zu einer Funktion verrechnet.

In einer vorteilhaften Ausgestaltung werden ferner globale Optimierungsziele definiert, die nicht mit einander verkoppelt sind, sowie lokale Führungsgrößengewichtungen für jede Führungsgröße individuell definiert, und es werden Optimierungszielwerte einer betrachteten Führungsgröße auf Basis der globalen Optimierungsziele und der lokalen Führungsgrößengewichtungen berechnet.

Die Führungsgrößen können beispielsweise auf Basis eines linearen Modells bewertet werden. In einer bevorzugten Ausführungsform wird hier festgelegt, in welche Richtung die Führungsgröße die Zielgröße beeinflusst. Alternativ kann auch ein phänomenologischer Ansatz zur Bewertung herangezogen werden. Ein phänomenologischer Ansatz stellt eine flexible und skalierbare Möglichkeit dar, die Emissionen zu modellieren. Dabei kann beispielsweise die Abweichung von emissionsrelevanten Haupteinflussgrößen bewerten werden und mit stationär erfassten Emissionswerten verrechnet werden. Für die Ruß- und NOx-Modellierung könnte beispielsweise der halb-empirische oder der phänomenologische Ansatz von CEBI, E.; ROTTENKOLBER, G. ; UYAR, E.: In-Cylinder Pressure Based Real-Time Estimation of Engine-Out Particulate Matter Emissions of a Diesel Engine; SAE International, 2011, genutzt werden.

In bevorzugten Ausführungsbeispielen erfolgt nach der Prädiktion des Stellbereichs eine Limitierung der jeweiligen Stellbereiche, um limitierte Stellbereiche zu ermitteln. Für die Sollwerte der Führungsgrößen können beispielsweise absolute und/oder relative, oder funktionale Grenzen festgesetzt werden. So kann beispielsweise verhindert werden, dass bei der Steuerung absolute Grenzwerte überschritten werden.

In den folgenden Ausführungsbeispielen wird auch eine Steuerung für einen Verbrennungsmotor beschrieben, die dazu ausgelegt ist, die beschriebenen Verfahren durchzuführen. Die Steuerung kann beispielsweise auf einer Kopplung zwischen einer bestehenden Motorsteuerung und einer Software bestehen, welche die beschriebenen Verfahren implementiert.

Für jede ausgewählte Führungsgröße kann das hier beschriebene Steuerungskonzept realisiert werden. Für jede der Führungsgrößen kann ein Koordinationsmodul vorgesehen werden, bei dem der originale Sollwert aus der Motorsteuerung und der angepasste dynamische Sollwert aus der dynamischen Führung eingeht. Durch die Aktivierungsbedingung kann zwischen dem originalen und dem dynamisch angepassten Sollwert gewechselt werden. Der Ausgang der jeweiligen Koordinationsmodule kann der Systemebene in der Motorsteuerung übergeben werden. Die Koordinationsebene kann beispielsweise als ein parametrierbarer Algorithmus implementiert werden, der zwischen den Eingangswerten rampen kann.

Mittels der hier beschriebenen Steuerungsverfahren lässt sich eine signifikante Verbesserung mehrerer Zielgrößen erreichen.

Ausführungsbeispiele der Erfindung werden nun beispielhaft und unter Bezugnahme auf die beigefügte Zeichnung beschrieben. Darin zeigt:

Fig. 1a     schematisch ein Motorsystem mit einem erfindungsgemäßen Steuergerät;

Fig. 1b     schematische eine Motorsteuerung, welche Motorsteuergerät samt Software repräsentiert;

Fig. 2a     schematisch einen Drehmomentensprung, der durch eine erhöhte Fahrleistungsanforderung durch den Fahrer verursacht wird;

4

Fig. 2b    schematisch beispielhafte Verläufe der Führungsgröße AGR-Rate;

Fig. 2c    schematisch beispielhafte Verläufe der Führungsgröße Raildruck;

Fig. 2d    schematisch beispielhafte Verläufe der Führungsgröße Verbrennungsschwerpunktlage;

Fig. 2e    schematisch beispielhafte Verläufe der Ruß-Emission;

Fig. 2f    schematisch beispielhafte Verläufe der NOx-Emission;

Fig. 3    ein Blockschaltbild eines Ausführungsbeispiels des erfindungsgemäßen Steuerungskonzeptes;

Fig. 4    ein Blockschaltbild eines weiteren Ausführungsbeispiels des erfindungsgemäßen Steuerungskonzeptes;

Fig. 5    ein Blockschaltbild einer beispielhaften Kombination aus bestehender Motorsteuerung und der dynamischen Führung;

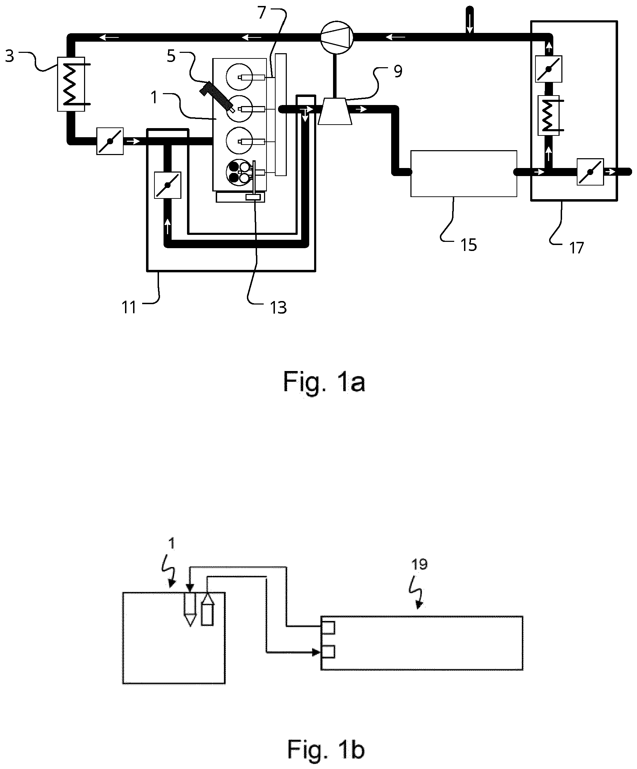

In Fig. 1a ist eine schematische Darstellung eines Motors mit wichtigen Komponenten gegeben. Fig. 1a zeigt einen Reihen-Vierzylinder Dieselmotor 1 mit integrierter Ladeluftkühlung 3. Dieser Kühler sorgt dafür, dass die Zylinderfüllung bedarfsgerecht gekühlt werden kann. Dies ermöglicht eine einstellbare Temperatur im Saugrohr, eine Reduktion der Strömungsverluste sowie eine Verbesserung des transienten Verhaltens des Motors. Ein Zylinderdrucksensor 5 ermöglicht es, Verbrennungsmerkmale in Echtzeit zu ermitteln und somit den Verbrennungsprozess zu regeln. Als Regelgröße kann unter anderem die Verbrennungslage und als dazugehörige Stellgröße der Ansteuerbeginn der Haupteinspritzung verwendet werden. Ein Common-Rail Einspritzsystem 7 kann einen Systemdruck erzeugen. Die Injektoren befördern den Kraftstoff in den Zylinder. Ein Abgasturbolader mit variabler Turbinengeometrie 9 verwendet die Abgasenergie des Motors, um eine Turbine anzutreiben. Mechanisch an die Turbine ist ein Verdichter-Rad gekoppelt, diese befindet sich im Ansaugtrakt. Hierdurch wird die Gasmasse vor dem Verdichter komprimiert und in den Zylinder befördert. Die variable Turbinengeometrie sorgt dafür, dass in jedem Betriebspunkt die notwendige Zylinderfüllung bereitgestellt werden kann. Durch eine Querschnittsverengung der Turbinen kann die Turbinenleistung der zur Verfügung stehenden Abgasenergie angepasst werden. Eine Hochdruck-Abgasrückführstrecke 11 bewirkt, dass das zurückgeführte ungekühlte Abgas kurz nach dem Start des Motors dafür sorgt, dass die NOx Emissionen reduziert werden und erhöht gleichzeitig die Abgastemperatur um die Abgasnachbehandlungskomponenten in den gewünschten Temperaturbereich zu bringen. Ein Variabler-Ventiltrieb 13 ermöglicht es, pro Zylinder ein Einlass- und Auslassventil gleichzeitig zu verstellen. Die Ventile an der variablen Nockenwelle können kontinuierlich zwischen einer Früh- und einer Spätverstellung variiert werden. Früh bedeutet, das variable Auslassventil öffnet früher und Spät bedeutet, das Auslass- und das Einlassventil öffnen später. Diese Komponente beeinflusst zur selben Zeit wichtige Brennverfahrensparameter wie Füllung, Brennraumdrall und die effektive Verdichtung. Besonders im Teillastbereich ist es somit möglich, eine emissionsreduzierende Verbrennung zu betreiben und sowohl die NOx als auch Ruß Emissionen zu senken. Eine Motor-Nahe-Abgasreinigungsanlage 15 befindet sich bei diesem Motorkonzept sehr nah dem eigentlichen Zylinderblock. Dies ermöglicht ein sehr schnelles und effizientes Erwärmen der Komponenten. Eine Niederdruck-Abgasrückführstrecke 17 ermöglicht es, das zurückgeführte und zusätzlich gekühlte Abgas mit der Frischluft zu vermischen und in den Zylinder zu fördern.

In Fig. 1b ist eine schematische Darstellung einer Motorsteuerung 19 gezeigt, welche Motorsteuergerät samt Software repräsentiert. Die Motorsteuerung 19 wird verwendet, um verbaute Sensoren auszulesen und verbaute Aktuatoren anzusteuern.

Über das Steuergerät 19 sind beispielsweise das Ventil der Abgasrückführungs-Niederdruckstrecke 17, das Ventil der Abgasrückführungs-Hochdruckstrecke 11 und der Variable Ventiltrieb 13. Ferner werden Sensoren wie beispielsweise der Zylinderdrucksensor 5 ausgelesen. In Fig. 1b ist zur Vereinfachung nur die Steuerung der Injektoren des Common-Rail Einspritzsystems 7 schematisch gezeigt.

Weiterhin kann das Steuergerät 19 über Sensoren und Sollwertgeber beispielsweise mit Temperaturinformationen (Zwischenkühler, Abgaskühlung) und mit Ist-Emissionswerten (z.B. aus einem Sensor oder physikalischen/empirischen Modell) versorgt werden.

Dazu können noch weitere Betriebszustandsinformationen kommen wie: Fahrpedalstellung, Drosselklappenstellung, Luftmasse, Batteriespannung, Motortemperatur, Kurbelwellendrehzahl und oberer Totpunkt, Getriebestufe, Fahrzeuggeschwindigkeit.

Es besteht also ein komplexes Steuer- und Regelsystem, welches den Motorbetrieb in unterschiedlichsten Betriebszuständen hinsichtlich unterschiedlicher Zielgrößen einstellen, regeln und möglichst optimieren soll.

**Dynamische Führung eines Dieselmotors**

Die Führungsgrößen des Systems weisen einen mehr oder weniger starken Einfluss auf die NOx- und Rußemissionen auf. Ziel der dynamischen Führung eines Dieselmotors ist es, den Einfluss zu kontrollieren, den eine Führungsgrößenanpassung in einem dynamischen Betrieb auf die Emissionen hat. In diesem Ausführungsbeispiel werden die drei Führungsgrößen AGR-Rate, Raildruck und Verbrennungsschwerpunktlage ausgewählt, die im stationären Fall einen erheblichen Einfluss auf NOx- und/oder Rußemission haben.

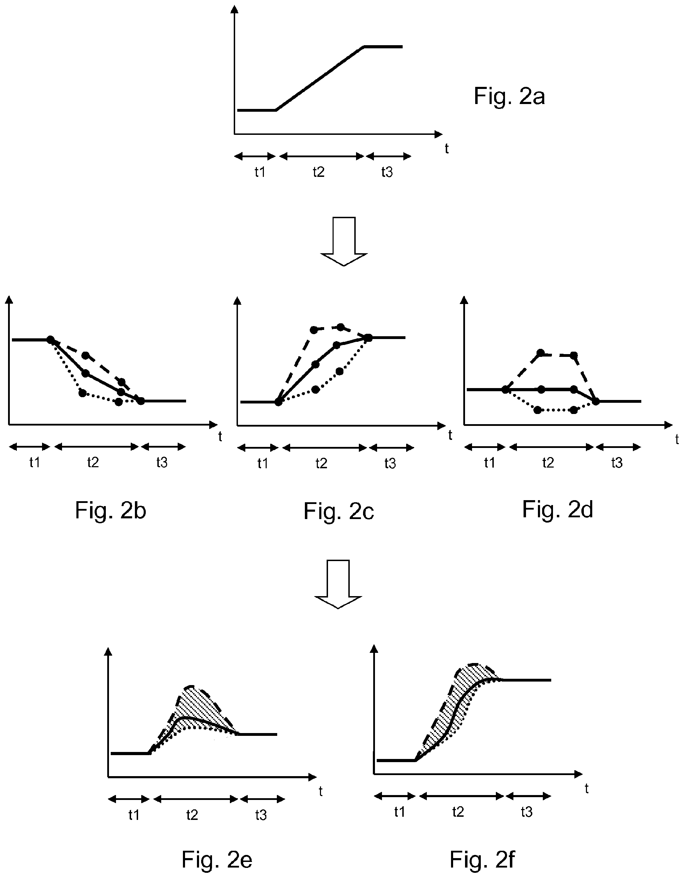

Fig. 2a zeigt schematisch einen Drehmomentensprung, der durch eine erhöhte Fahrleistungsanforderung durch den Fahrer verursacht wird und als Basis für den dynamischen Verlauf dient. In einer ersten Zeitspanne t1 befindet sich die Motor in einem ersten stationären Zustand mit einer geringen Drehmomentanforderung. Auf die Zeitspanne t1 folgt eine Zeitspanne t2, die den dynamischen Übergang kennzeichnet. Zu Beginn der Zeitspanne t2 setzt ein Drehmomentensprung ein, der durch eine erhöhte Fahrleistungsanforderung durch den Fahrer verursacht wird. Das Drehmoment folgt dem Anforderungswunsch in der Zeitspanne t2 mit einer gewissen Trägheit und erreicht am Ende der Zeitspanne t2 das Zieldrehmoment. Im Zeitraum t3 befindet sich der Motor wieder in einen stationären Zustand, diesmal jedoch mit erhöhtem Drehmoment.

In den Fig. 2b, c und d sind jeweils drei mögliche beispielhafte dynamische Verläufe der Führungsgrößen AGR-Rate, Raildruck bzw. Verbrennungsschwerpunktlage schematisch gezeigt, die sich anhand des Drehmomentensprungs sowie den stationär applizierten Sollwerten der Motorsteuerung ergeben. Auf der Rechtsweiteachse ist die Zeit aufgetragen, auf der Hochwertachse der Wert der jeweiligen Führungsgröße. Die durchgezogene Linie kann jeweils als Refenzverlauf betrachtet werden. Die gestrichelten und gepunkteten Linien kennzeichnen Variationsmöglichkeiten, die vom Refenzverlauf abweichen.

Innerhalb der Zeitspanne t2 findet der dynamische Übergang vom niedrigen zum hohen Lastpunkt statt. In diesem Ausführungsbeispiel werden die Führungsgrößen nur innerhalb dieses Bereiches t2 variiert. In den Fig. 2b, 2c und 2d sind im dynamischen Übergang diskretisierte Vektoren für die Führungsgrößen dargestellt. Jedes Element des Vektors (der jeweilige Wert einer Führungsgröße) wird bezogen auf eine zeitlich basierte Laufvariable (Zeit t) ausgewählt. In Echtzeit ergibt sich zu jedem Zeitpunkt $t_n$ ein Stellvektor pro Führungsgröße der nur im aktuellen Zeitschritt gültig ist. Die dargestellten Verläufe über der Zeit t ergeben sich somit hinterher. Werte zwischen zwei Stützstellen innerhalb eines Vektors können linear interpoliert werden. Somit ergibt sich, bezogen auf die Laufvariable (Zeit t), ein kontinuierlicher Verlauf für eine Führungsgröße.

Es ist zu erkennen, dass die Verlagerung auf einen höheren Betriebspunkt dazu führt, dass die Führungsgröße AGR-Rate gesenkt wird (Fig. 2b), um das notwendige Drehmoment zu erreichen, der Raildruck angehoben wird (Fig. 2c), um eine bessere Aufbereitung des Zylindergemisches zu erzielen, und die Verbrennungslage weitgehend konstant bleibt (Fig. 2d), um den Wirkungsgrad des Verbrennungsprozesses konstant zu halten.

In der Fig. 2b wird beispielsweise die AGR-Rate einerseits während des Sprungs unter den Sollwert reduziert und am Ende des dynamischen Verlaufs wieder auf den Sollwert geführt (gepunktete Linie). Durch einen geringeren Inertgasanteil bzw. einen höheren Frischluftanteil soll die Ruß-Emissionen gesenkt werden. Dies ist durchaus möglich, jedoch können sich damit die NOx-Emissionen erhöhen. Alternativ wird die AGR-Rate langsamer als im Referenzverlauf auf den stationären Sollwert geführt (gestrichelte Linie). Durch das langsame Absenken der AGR-Rate der Inertgas im Zylinder auf einem möglichst hohen Niveau gehalten werden. Damit soll eine NOx-Absenkung erreicht werden.

Fig. 2c zeigt, dass die Führungsgröße Raildruck unterschiedlich stark angehoben werden kann. Diese Führungsgröße hat einen wesentlichen Einfluss auf die Ruß-Emissionen. Mit der stärksten Übersteuerung (gestrichelte Linie) ist eine Reduktion der Ruß-Emissionen erreichbar. Der Einfluss auf die NOx-Emissionen ist nicht wesentlich. Grund hierfür ist die verbesserte Zerstäubung des Kraftstoffs, diese führt zu einer besseren Verbrennung und somit zu weniger Ruß-Emissionen.

Fig. 2d zeigt die Führungsgröße Verbrennungslage. Diese kann während des Momentensprungs entweder stärker zum oberen Totpunkt hin- (gestrichelte Linie) oder weiter vom oberen Totpunkt wegbewegt (gepunktete Linie) werden. Durch eine Verlagerung näher an den oberen Totpunkt erhöht sich die Durchmischung im Brennraum, dies führt wiederum zu einer verbesserten Ruß-Oxidation und somit zu weniger Ruß. Als Gegenreaktion wird das kritische Temperaturniveau für die NOx-Bildungsprozesse schneller erreicht, wodurch sich die NOx-Emission erhöht. Durch Beeinflussung der der Verbrennungslage ist eine Reduktion der Ruß-Emissionen von über 10% möglich ist bei einem gleichzeitigen Anstieg der NOx-Emissionen von ebenfalls ca. 10%. Eine Verschiebung der Verbrennungsschwerpunktlage weiter vom oberen Totpunkt weg führt zu einem geringeren Temperaturniveau im Brennraum, was die NOx-Bildung verlangsamt. Auf der anderen Seite wird die Ruß-Oxidation stark beeinträchtigt. Ähnlich wie bei der AGR-Rate ist es mit der Verbrennungslage möglich, Ruß-und NOx-Emission zu beeinflussen.

Die Fig. 2e und 2f zeigen schematisch beispielhafte Ruß-Emissionen bzw. NOx-Emissionen, die für den dynamische Übergang der Führungsgrößen der Fig. 2b, c und d verbunden sein können. Die durchgezogenen Linien zeigen Ruß-Emission bzw. NOx-Emissionen, die mit den Referenzverläufen der Führungsgrößen einhergehen. Die gestrichelten und die gepunkteten Linien zeigen alternative Verläufe der Ruß-Emission bzw. NOx-Emissionen, die bei Abweichung von den Rerenzverläufen auftreten können.

**Steuerungskonzept**

Gemäß des dynamischen Steuerungskonzepts dieser Erfindung können zwei oder mehr Führungsgrößen gleichzeitig angepasst werden, um die Schadstoffemission zu optimieren, d.h. es wird durch das erfindungsgemäße Steuerungskonzept nach Kombination gesucht, die es ermöglichen NOx- und Ruß-Emissionen gleichzeitig zu senken.

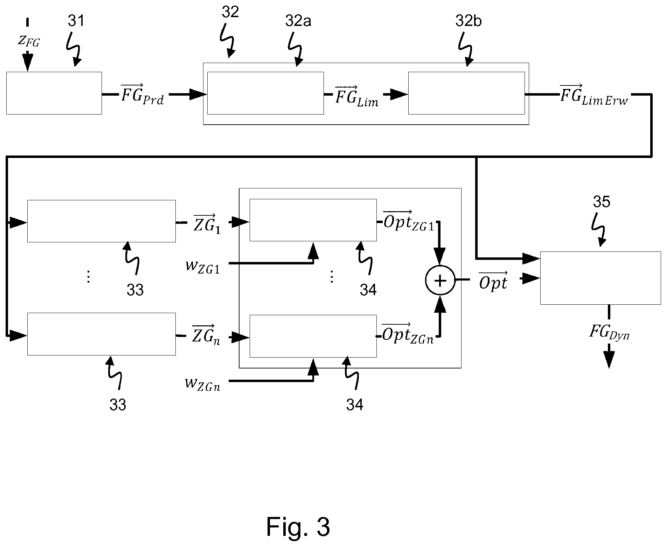

Fig. 3 zeigt ein Blockschaltbild eines Ausführungsbeispiels des erfindungsgemäßen Steuerungskonzeptes. Das Funktionskonzept der dynamischen Führung besteht aus vier Schritten. Zu Beginn werden in Schritt 31 die Möglichkeiten $\overrightarrow{FG}_{Prd}$ der Führungsgröße prädiziert. Anschließend erfolgt in Schritt 32 eine Limitierung bestehend aus einer Basis-Limitierung 32a und ggf. einer erweiterte Limitierung 32b, um die sich ergebenden Stellbereiche $\overrightarrow{FG}_{Prd}$ zu plausibilisieren und gegebenenfalls einzuschränken, um ein instabiles Systemverhalten zu verhindern und um bestehende Kopplungen zu anderen Führungsgrößen zu berücksichtigen. Dann wird in Schritt 33 der resultierende limitierte Stellbereich $\overrightarrow{FG}_{Lim}$ bzw. $\overrightarrow{FG}_{LimErw}$ einer jeweiligen Führungsgröße auf die gewünschten Zielgrößen $ZG_1$ bis $ZG_n$ abgebildet (Zielgrößenbewertung) und in Schritt 34 die Optimierungsfunktion $\overrightarrow{Opt}$ bestimmt. Zuletzt wird in Schritt 35 das Optimum bestimmt und der dynamische Sollwert $FG_{Dyn}$ ermittelt. Dieser optimierte dynamische Sollwert kann schließlich sicher eingestellt werden.
Das hier offenbarte Steuerungskonzept ist so allgemein formuliert, das es auch innerhalb anderer Anwendungsgebiete mit ähnlicher Problemstellung eingesetzt werden kann.
Die vier Einzelfunktionen Prädiktion, Limitierung, Zielgrößenbewertung und Bestimmung der Optimierungsfunktion werden im Folgenden näher erläutert.

**Prädiktion**

Befindet sich das System in einer dynamischen Systemphase, so wird für jede Führungsgröße das mögliche Stellpotenzial abgeschätzt. Die ausgewählten Führungsgrößen für das Steuerungskonzept sollten eine gewisse Stelldynamik aufweisen. D.h. es sollte möglich sein, diese Führungsgrößen während eines dynamischen Übergangs sowohl über- als auch untersteuern zu können, wie dies im Abschnitt oben bezüglich der Fig. 2b, c und d gezeigt ist.
Am Anfang wird auf Basis des Führungsgrößen-Zustandes $Z_{FG}$ der gesamte mögliche Einstellbereich prädiziert. Der Prädiktionszeithorizont kann für die jeweilige Führungsgröße abweichen. Der Zeithorizont stellt für die Führungsgröße einen Zeitbereich dar, in dem eine signifikante Änderung der Führungsgröße und somit auch der Zielgröße erzielt werden kann. Der Führungsgrößenzustand enthält alle notwendigen Informationen, die für die Prädiktion der Führungsgröße wichtig sind.

$$z_{FG} = \{FG_{Act}(t_n, \cdots, t_0), FG_{Des}(t_n, \cdots, t_0), T, p, S_{Posn}, \cdots\} \qquad (1)$$

Es kann sich hierbei, um aktuelle und vergangene Soll- / Istwerte der Führungsgröße ($FG_{Des}$ und $FG_{Act}$) handeln, aber auch um physikalische Größen wie Temperaturen, Drücke, Steller Position, usw. Innerhalb des Prädiktionsschrittes wird somit folgende Funktion bestimmt:

$$\overrightarrow{FG}_{Prd} = f_{Prd}(z_{FG}). \qquad (2)$$

wobei $\overrightarrow{FG}_{Prd}$ den Stellbereich für jede Führungsgröße beschreibt.
Die Prädiktion $f_{Prd}$ der Führungsgröße kann auf verschiedene Arten, z.B. signalbasiert (lineare Extrapolation und Mehrschritt-Verfahren nach Adams-Bashforth) oder auch physikalisch orientiert erfolgen. Im Folgenden wird beispielhaft eine Prädiktion der Führungsgröße mittels linearer Extrapolation beschrieben.
Für die jeweilige Führungsgröße wird anhand von Sprungversuchen die positive $m_{Pos}$ und negative $m_{Neg}$ Steigungen ermittelt. Der Term $t_P$ definiert den Prädiktionshorizont, in diesem Ausführungsbeispiel sind zwei Prädiktionshorizonte vorhanden. Ein langer Zeithorizont betrachtet die zugeordnete Führungsgröße für zehn Abtastschritte in die Zukunft, ein mittlerer Zeithorizont betrachtet zwei Abtastschritte. Für die Prädiktion der maximalen Übersteuerung ($FG_{PrdMax}$) im betrachteten Zeithorizont wird folgende Gleichung verwendet:

$$FG_{PrdMax} = \begin{cases} FG_{MaxAbs} & \text{für } (m_{Pos} \cdot t_P + FG_{Act,t_n}) \geq FG_{MaxAbs} \\ m_{Pos} \cdot t_P + FG_{Act,t_n} & \text{sonst} \end{cases} \qquad (3)$$

Der positive Steigungsterm wird als $m_{Pos} > 0$ definiert. Der Wert $FG_{MaxAbs}$ repräsentiert den absoluten maximalen Stellwert der Führungsgröße und dient zur Plausibilisierung des möglichen Stellhorizontes. Beispielsweise würde für den Wert der AGR-Rate der Wert $rAGR_{MaxAbs} = 100\%$ betragen, da die AGR-Rate nicht mehr als 100% betragen kann. Die Definition der jeweiligen Werte ist für jede Führungsgröße individuell zu ermitteln bzw. zu definieren. Für die Prädiktion der maximalen Untersteuerung ($FG_{PrdMin}$) im betrachteten Zeithorizont wird dementsprechend die Gleichung:

$$FG_{PrdMin} = \begin{cases} FG_{MinAbs} & \text{für } (m_{Neg} \cdot t_P + FG_{Act,t_n}) \leq FG_{MinAbs} \\ m_{Neg} \cdot t_P + FG_{Act,t_n} & \text{sonst} \end{cases} \qquad (4)$$

verwendet. Der negative Steigungsterm wird als $m_{Neg} < 0$ definiert. Der Wert $FG_{minAbs}$ repräsentiert den absoluten minimalen Stellwert der Führungsgröße.

Wenn davon ausgegangen wird, dass die Führungsgröße im berechneten Zeitschritt entweder den Wert $FG_{prdMax}$ oder den Wert $FG_{prdMin}$ erreichen kann, so kann sie auch alle Werte dazwischen einstellen. Somit lässt sich der mögliche prädizierte Stellbereich folgendermaßen bestimmen:

$$FG_{Prd,i} = \frac{FG_{PrdMax} - FG_{PrdMin}}{r} \cdot j + FG_{PrdMin} \qquad (5)$$

mit i = 1, 2, ..., r + 1 für $j \in J$ und $J = \{0,1,..., r\}$ gilt

$$FG_{Prd,i} \in \overrightarrow{FG}_{Prd}. \qquad (6)$$

Wobei r die Anzahl der Stützstellen ist mit $r \in \mathbb{N}_{>0}$ .

Da die Steuerung im diskreten Bereich arbeitet, sind die Werte $FG_{Prd,i}$ die einzelnen Elemente des Stellbereiches $\overrightarrow{FG}_{Prd}$ gemäß der Gleichung (5) in r + 1 Stützstellen diskretisiert. Die Anzahl der Stützstellen kann applikativ angepasst werden und kann für jede Führungsgröße anders sein.

Die Steigungsfaktoren $m_{Pos}$ und $m_{Neg}$ sind maßgeblich für die Stelldynamik der Führungsgröße verantwortlich. Diese können als Faktor aber auch als ein (d1)- bzw. zweidimensionale (d1; d2) Funktionen realisiert werden:

$$m_{Pos} \text{ bzw. } m_{Neg} = f(d_1) \text{ oder } f(d_1,d_2). \qquad (7)$$

**Limitierung**

Die Prädiktion ermittelt für jede Führungsgröße den möglichen Stellbereich $\overrightarrow{FG}_{Prd}$. Dieser kann je nach Stelldynamik der Führungsgröße stark variieren. Es wird davon ausgegangen, dass bei einer gewissen Abweichung der Führungsgröße um den stationären definierten Wert, das gesamte System immer noch stabil betrieben werden kann. Möchte man den gesamten Stellbereich nutzen, so ist es vorteilhaft, komplexe Funktionen zu verwenden, um plausibilisieren zu können, in wieweit die Über- bzw. Untersteuerung der Führungsgröße zu Instabilität führen kann. Dies gilt jedoch nur für Führungsgrößen mit einer sehr hohen Stelldynamik. Die Grenzwerte $FG_{LimMax}$ und $FG_{LimMin}$ für die Basis-Limitierung können messtechnisch ermittelt werden oder sich auf Erfahrungswerte beziehen. Der limitierte Stellbereich der Führungsgröße lässt sich folgendermaßen berechnen:

$$\overrightarrow{FG}_{Lim} = f_{Lim}(\overrightarrow{FG}_{Prd}). \qquad (8)$$

Die Funktion $f_{Lim}$ überprüft ob die Elemente $FG_{Prd,i}$ von $\overrightarrow{FG}_{Prd}$ sich innerhalb der Grenzwerte befinden. Ist beispielsweise ein Element außerhalb der Grenzwerte so wird dieses Element durch den jeweiligen Grenzwert ersetzt (Gleichung (10)). Es gilt für

$$FG_{Lim,i} \in \overrightarrow{FG}_{Lim} \qquad (9)$$

die Rechenvorschrift

$$FG_{Lim,i} = \begin{cases} FG_{LimMax} & f\ddot{u}r\ FG_{Prd,i} \geq FG_{LimMax} \\ FG_{LimMin} & f\ddot{u}r\ FG_{Prd,i} \leq FG_{LimMin} \\ FG_{Prd,i} & sonst \end{cases} \qquad (10)$$

mit $i = [1, ..., n]$. Wobei $n$ die Anzahl der Elemente in $\overrightarrow{FG}_{Prd}$ ist.

Wie schon zuvor erwähnt, ist die dargestellte Limitierungsvariante eine Basismethode, um die Führungsgrößenstellmöglichkeit zu reduzieren. Es kann jedoch vorteilhaft sein, erweiterte Funktionen zu verwenden, um den Stellbereich zu reduzieren. Dies ist immer dann der Fall, wenn Führungsgrößen, egal ob diese in das Steuerungskonzept integriert sind oder nicht, sich gegenseitig beeinflussen. Wenn dies der Fall ist, ist es vorteilhaft, eine erweiterte Limitierung zu formulieren und im Rahmen des Konzeptes zu rechnen.

$$\overrightarrow{FG}_{LimErw} = f_{LimErw}(\overrightarrow{FG}_{Lim}) \qquad (11)$$

Ein Beispiel für solch eine Formulierung wird im Folgenden für die AGR-Rate dargestellt:
Für den Fall der AGR-Rate besteht eine starke Koppelung zu den Führungsgrößen indiziertes Moment bzw. eingebrachte Kraftstoffmenge und eingebrachte Zylindergasfüllung bzw. Frischluftmenge. Zwar werden diese Führungsgrößen nicht im Steuerungskonzept dynamisch variiert, es ist jedoch zwingend erforderlich diese Führungsgrößen nicht negativ zu beeinflussen. Denn das indizierte Moment ist für die Erzeugung des effektiven Momentes und somit für den Vortrieb des Fahrzeugs verantwortlich. Die Limitierungsfunktion für die AGR-Rate bezogen auf das innere Moment und Füllung kann wie folgt aussehen. Das innere Moment ($M_{Inr}$) berechnet sich aus der eingebrachten Kraftstoffmenge ($m_B$) sowie dem Umsetzungsfaktor Kraftstoff zu Moment ($m_B2M_{Inr}$). Dieser lässt sich messtechnisch erfassen und in Form eines Kennfeldes $m_B2M_{Inr} = f(M_{Inr}; n_{Drz})$) darstellen. Die Gleichung für das innere Moment lautet somit:

$$M_{Inr} = m_B \cdot m_B2M_{Inr}. \qquad (12)$$

Wird für eine Führungsgröße keine erweiterte Limitierung vorgesehen, dann gilt:

$$\overrightarrow{FG}_{LimErw} = \overrightarrow{FG}_{Lim} \qquad (13)$$

Mit dem indizierten Sollmoment lässt sich somit die notwendige Kraftstoffmenge berechnen. Diese wird dann verwendet, um die notwendige Frischluftmenge ($m_L$) für den Verbrennungsprozess zu berechnen. Hierfür ist der Luftbedarf für Dieselkraftstoff ($L_{st,Diesel}$) sowie eine minimales Luftverhältnis ($\lambda_{Lim}$) notwendig. Die Berechnung ergibt sich somit folgendermaßen:

$$m_{LftVrb} = m_B \cdot L_{st,Diesel} \cdot \lambda_{Lim}. \qquad (14)$$

Die aktuell vorhandene Frischluftmenge($m_L$) lässt sich aus der Zylindergasfüllung ($m_{Zyl}$) und der AGR-Rate ($r_{Agr}$) herleiten:

$$m_L = m_{Zyl} \cdot (1 - r_{Agr}). \qquad (15)$$

Die Gleichungen (14) und (15) lassen sich zusammenführen und bezüglich der AGR-Rate umstellen. Es ergibt sich somit die maximal mögliche AGR-Rate ($r_{AgrMax}$):

$$r_{AgrMax} = 1 - \frac{m_{LftVrb}}{m_{Zyl}}. \qquad (16)$$

Daraus resultiert eine erweiterte Limitierungsfunktion, die nach der Basislimitierung verwendet wird. Die maximal mögliche AGR-Rate ist somit abhängig vom indizierten Sollmoment und der Zylindergasfüllung:

$$r_{AgrMax} = f_{LimErw-rAgr}(M_{Inr}, m_{Zyl}). \qquad (17)$$

Ist für eine Führungsgröße keine erweiterte Limitierung notwendig, dann gilt:

$$\overrightarrow{FG}_{LimErw} = \overrightarrow{FG}_{Lim} \qquad (18)$$

**Zielgrößenbewertung**

Nach der Abschätzung des möglichen Stellbereiches der jeweiligen Führungsgröße und nach der einfachen bzw. erweiterten Limitierung ist der nächste Schritt im Steuerungskonzept die Bewertung hinsichtlich der ausgewählten Zielgrößen:

$$\overrightarrow{ZG}_i = f_{ZGi}(\overrightarrow{FG}_{LimErw}) \qquad (19)$$

mit

$$ZG_j \in \overrightarrow{ZG}_i \text{ gilt } ZG_j \in [0,1]. \qquad (20)$$

Der Wert 0 für ein Element $ZG_j$ bedeutet, dass die Zielgröße eine sehr schwache Ausprägung hat und der Wert 1 entsprechend umgekehrt. Eine Zielgrößenreduktion ist somit immer dann gegeben, wenn $ZG_j$ gegen 0 geht.
Die Bewertungsfunktionen für die jeweiligen Zielgrößen ($f_{ZGi}$) können sehr unterschiedlich sein. Diese Formulierung macht deutlich wie vorteilhaft es ist, die richtigen Führungsgrößen zu wählen bzw. ein System mit möglichst physikalisch basierten Führungsgrößen zu haben. Eine physikalisch basiert Führungsgröße vereinfacht meistens die Abbildung auf definierte Zielgrößen. Außerdem entsteht mit solchen Führungsgrößen eine gewisse Allgemeingültigkeit und die implementierte Steuerung lässt sich einfacher auf verwandte Systeme oder Derivate anwenden. Der Zusammenhang zwischen Führungsgröße und Zielgröße muss natürlich für das individuelle Problem angepasst werden.
Eine Möglichkeit, die Führungsgrößen auf die Zielgrößen abzubilden, stellen lineare Modelle dar. Hierbei wird festgelegt, in welche Richtung ($r_{FG,ZG}$) die Führungsgröße die Zielgröße beeinflusst. Für die beispielhaften drei Führungsgrößen werden beim linearen Bewertungsansatz folgende Richtungen festgelegt.

- Die AGR-Rate hat eine negative Steigung bezüglich NOx-Emissionen und eine positive Steigung bezüglich Ruß-Emissionen. D.h. wenn die AGR-Rate steigt fallen die NOx-Emissionen bzw. wenn diese fällt, sinken auch die Ruß-Emissionen ($r_{rAGR,NOx}$ = -1) und ($r_{rAGR,Russ}$ = 1)
- Der Raildruck hat eine negative Steigung hinsichtlich Ruß-Emissionen ($r_{Rail,Russ}$ = -1)
- Die Verbrennungsschwerpunktlage hat eine positive Steigung ($r_{Ai50,NOx}$ = 1) bezüglich NOx- und eine negative Steigung bezüglich Ruß-Emissionen ($r_{Aq50,Russ}$ = -1).

Die Richtung der Führungsgrößen auf die Zielgrößen kann anhand der physikalischen Zusammenhänge bezüglich der Emission hergeleitet werden. Es ist aber auch möglich die Zusammenhänge empirisch anhand von Messungen abzuleiten.
Die lineare Bewertungsmethode lässt sich folgendermaßen definieren. Mit der limitierten Stellmöglichkeit der Führungsgröße $\overrightarrow{FG}_{LimErw}$ als Basis ergibt sich:

$$ZG_j = FG_{LimErw,j} \cdot m + c \qquad (21)$$

mit

$$m = \frac{1}{max(\overrightarrow{FG}_{LimErw}) - min(\overrightarrow{FG}_{LimErw})} \cdot r_{FG,ZG} \qquad (22)$$

und

$$c = \begin{cases} 1 - max(\overrightarrow{FG}_{LimErw}) \cdot m & \text{für } r_{FG,ZG} = 1 \\ 1 - min(\overrightarrow{FG}_{LimErw}) \cdot m & \text{für } r_{FG,ZG} = -1 \end{cases} \qquad (23)$$

für

$$ZG_j \in \overrightarrow{ZG}, FG_{PredLim,j} \in \overrightarrow{FG}_{PredLim} \text{ mit } j = [1, \cdots, r]. \qquad (24)$$

Die Elemente $ZG_j$ und $FG_{PredLim,j}$ sind Bestandteile der jeweiligen Bereiche ($\overrightarrow{ZG}$, und $\overrightarrow{FG}_{PredLim}$). Die Anzahl r ist definiert über die gewählte Diskretisierung der Führungsgröße (siehe Gleichung (5)).

Die Verwendung von derartigen linearen Annahmen ist im Zusammenhang mit der Emissionsentstehung eine vereinfachte Annahme. Die physikalischen Zusammenhänge werden zwar nicht in ihrer Fülle wiedergeben, die Richtung stimmt jedoch mit den physikalischen Zusammenhängen überein.

**Optimierungsfunktion**

Damit eine eindeutige Auswahl für die Führungsgröße getroffen werden kann, wird eine Optimierungsfunktion gebildet, die alle betrachteten Zielgrößenbewertungen berücksichtigt. Damit bei einer Vielzahl von Zielgrößen ein eindeutiges Ergebnis bestimmt werden kann, wird eine Zielgrößengewichtung ($w_{ZGi}$) definiert. Die Anzahl der Zielgrößengewichtung ist identisch mit der Anzahl der Zielgrößen für die betrachtete Führungsgröße.

Für diese Zielgrößengewichtungen gilt:

$$\sum_{i=1}^{n} w_{ZGi} = 1. \qquad (25)$$

Die Zielgrößengewichtung für eine Zielgröße kann einen Wert zwischen 0 und 1 annehmen. Wobei eine 1 bedeutet, dass diese Zielgröße soweit es möglich ist minimiert werden soll. Die Zielgrößengewichtungen ergeben in Summe den Wert 1. Mit Hilfe der jeweiligen Zielgrößenbewertung $\overrightarrow{ZG}_i$ wird eine Optimierungsfunktion $\overrightarrow{Opt}_{ZGi}$ für jede Zielgröße formuliert. Für:

$$\overrightarrow{Opt}_{ZGi} = f_{Opt}(\overrightarrow{ZG}_i, w_{ZGi}) \qquad (26)$$

gilt

$$\overrightarrow{Opt}_{ZGi} = |\overrightarrow{ZG}_i - g_{ZGi}|. \qquad (27)$$

Der Optimierungszielwert $g_{ZGi}$ ist definiert als:

$$g_{ZGi} = f_g(\overrightarrow{ZG}_i, w_{ZGi}) = max(\overrightarrow{ZG}_i) - [(max(\overrightarrow{ZG}_i) - min(\overrightarrow{ZG}_i)) \cdot w_{ZGi}] \qquad (28)$$

Die Funktion $f_g(\overrightarrow{ZG}_i, w_{ZGi})$ bestimmt für den gegebenen Zielgrößenbereich ($\overrightarrow{ZG}_i$) und die Zielgrößengewichtung

($w_{ZGi}$) den zu erreichenden Optimierungszielwert ($g_{ZGi}$). Durch die Berücksichtigung von $w_{ZCi}$ ist stets eine Verschiebung von $g_{ZGi}$ möglich. In der Gleichung wird der gesamte zu optimierende Bereich ($max(\overrightarrow{ZG_i})$ - $min(\overrightarrow{ZG_i})$) mit dem Faktor $w_{ZCi}$ multipliziert und vom Maximum des Zielgrößenbereiches abgezogen.

Damit lässt sich der Wert $w_{ZGi}$ als zu realisierendes Optimierungsmaß für die Zielgröße interpretieren. D. h. je näher der Wert für die Zielgrößengewichtung gegen 1 geht, desto mehr Optimierungspotenzial soll ausgenutzt werden. Die Kopplung der einzelnen Zielgrößengewichtungen über die Gleichung (25) sorgt dafür, dass für die Führungsgröße ein eindeutiges Optimierungsziel bestimmt werden kann.

Als vorletzter Schritt werden die einzelnen Optimierungsfunktionen zu einer Funktion verrechnet.

$$\overrightarrow{Opt} = \sum_{i=1}^{n} \overrightarrow{Opt}_{ZGi} \qquad (29)$$

mit *n* als die Anzahl der Zielgrößenbewertungen für die Führungsgröße.

Zuletzt wird das Minimum der Optimierungsfunktion $\overrightarrow{Opt}$ bestimmt und der dazugehörige Wert aus dem limitierten Stellbereich $\overrightarrow{FG}_{LimErw}$ ergibt den zu stellenden dynamischen Führungsgrößensollwert $FG_{Dyn}$. Das Minimum der Optimierungsfunktion $\overrightarrow{Opt}$ kann mit beliebigen, dem Fachmann bekannten Optimierungsverfahren, beispielsweise mittels numerischer Optimierungsverfahren, durchgeführt werden. Als ein lokales Optimierungsverfahren könnte beispielsweise das allgemein bekannte Simplex-Verfahren zur Anwendung kommen. Als ein globales Verfahren könnte beispielhaft das Random-Lines-Verfahren zur Anwendung kommen, das von SAHIN, I. in "Random Lines: A Novel Population Set-Based Evolutionary Global Optimization Algorithm in Genetic Programming" Torino, Italy, 2011, beschrieben wurde.

Damit die Steuerung mit einer Vielzahl von Führungsgrößen arbeiten kann, wird in dem folgenden Ausführungsbeispiel die Definition der Zielgrößengewichtung erweitert. Es werden zwei Kriterien definiert, die jeweils lokal und global gültig sind.

Die globalen Optimierungsziele $h_{ZGi}$ sind im folgenden Bereich definiert:

$$h_{ZGi} \in [0,1] \qquad (30)$$

mit *i* = [1, ..., *n*] *für n* als die Anzahl der unterschiedlichen Zielgrößen ($ZG_1$ bis $ZG_n$), die die Steuerung optimieren soll. Die globalen Optimierungsziele sind gemäß der Definition nicht mit einander verkoppelt und können somit jeweils einen Wert zwischen 0 bis 1 annehmen.

Die lokalen Führungsgrößengewichtungen $wFG_{ZGi}$ sind für jede Führungsgröße individuell definiert und erfüllen folgende Bedingung:

$$\sum_{j=1}^{n} wFG_{ZGj} = 1. \qquad (31)$$

Bei dieser Definition sieht man die Kopplung der einzelnen Gewichtungen miteinander. Der Index j ist nicht gleichzusetzen mit dem Index i aus der Gleichung (30). Da eine Führungsgröße nicht zwingend auf alle Zielgrößen abgebildet werden muss, wenn diese die Zielgröße nicht beeinflusst.

Gemäß der Berechnung oben folgt für den Optimierungszielwert der betrachteten Führungsgröße:

$$g_{ZGi} = max(\overrightarrow{ZG_i}) - [(max(\overrightarrow{ZG_i}) - min(\overrightarrow{ZG_i})) \cdot h_{ZGi} \cdot wFG_{ZGi}]. \qquad (32)$$

Wie bereits erwähnt, gilt dieser Optimierungszielwert nur für den Zielgrößenbereich $\overrightarrow{ZG_i}$ der aus der Zielgrößenbewertung für die Führungsgröße FG hervorgeht. In dieser Gleichung wird der globale Optimierungszielwert $h_{ZGi}$ und die lokale Zielgrößengewichtung $wFG_{ZGi}$ verwendet, um zu ermitteln, welches Optimierungspotenzial für die jeweilige Zielgröße genutzt werden soll.

Für die Optimierungsfunktion der Führungsgröße bezogen auf die jeweilige Zielgröße $Opt_{ZGi}$ gilt wie zuvor:

$$\overrightarrow{Opt_{ZGi}} = |\overrightarrow{ZG_i} - g_{ZGi}|. \qquad (33)$$

Die resultierende Optimierungsfunktion ($\overrightarrow{Opt}$) für die Führungsgröße ist wie folgt definiert:

$$\overrightarrow{Opt} = \sqrt{\frac{1}{n} \sum_{i=1}^{n} \cdot (\overrightarrow{Opt_{ZGi}})^2}. \qquad (34)$$

Im Vergleich zu Gleichung (29) wird anstelle einer Summation der einzelnen zielgrößenspezifischen Optimierungsfunktionen $\overrightarrow{Opt_{ZGi}}$ in diesem Fall das Quadratische-Mittel berechnet. Untersuchungen haben gezeigt, dass diese Formulierung die stabilsten Lösungen ergibt.

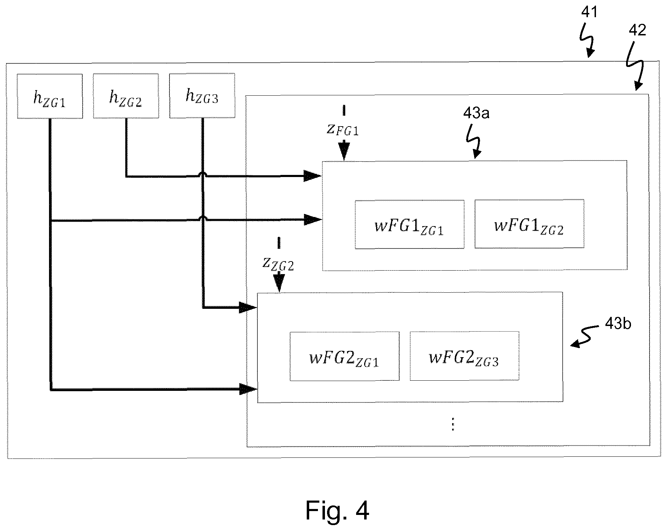

Ausgehend von der Darstellung des Funktionskonzeptes in Fig. 3, lässt sich mit den überarbeiteten Gewichtungen das Konzept ein allgemeineres Ausführungsbeispiel darstellen (Fig. 4).

Fig. 4 zeigt zwei hierarchische Ebenen (System 41 und Subsystem 42). Die globalen Führungsgrößen $h_{ZGi}$ sind innerhalb der oberen Ebene (System 41) definiert. Innerhalb des Subsystems 42 werden je nach Bedarf ein oder mehrere Führungsgrößen ausgewählt, um darauf das Steuerungskonzept anzuwenden. Innerhalb der jeweiligen Steuerung 43a, 43b der Führungsgröße werden die lokalen führungsgrößenabhängigen Gewichtungen $wFG_{ZGi}$ definiert und abgelegt. Die globalen Gewichtungen haben, aufgrund der neuen Formulierung der Optimierungsfunktion, einen Einfluss auf die Steuerungen der Führungsgrößen. In Fig. 4 ist zu erkennen, dass die Führungsgrößen unterschiedliche Zielgrößen beeinflussen. Dementsprechend erfolgt auch die Kopplung zwischen $h_{ZGi}$ und den Steuerungen.

Ein wesentlicher Vorteil dieser Struktur ist die hohe Modularisierbarkeit und die Trennbarkeit von Optimierungsmöglichkeiten und Optimierungszielen. Wenn das System oder die Subsysteme die notwendigen Anforderungen erfüllen und die Steuerung dafür realisiert ist, kann eine beliebige Kombination aus Subsystemen in einem System erfolgen. Die Anzahl der Führungsgrößen, die dabei durch ein Subsystem bereitgestellt werden, ist hierbei nicht limitiert. Je stärker die Führungsgrößen von einander entkoppelt sind und je signifikanter ihr Einfluss auf die Zielgrößen, desto besser. Dieses Konzept ermöglicht es, ein Subsystem mit der Steuerung auszustatten und zu parametrieren. Anschließend ist eine Integration in unterschiedliche Systeme möglich. Die Parametrierung auf Systemebene sorgt dafür, dass das Subsystem das richtige Optimierungsziel mit dem richtigen Maß erreicht.

Alternativ zu der hier beschriebenen lokalen Optimierung können auch globale Optimierungsstrategien oder Mischformen aus lokalen und globalen Optimierungsstrategien zur Anwendung kommen.

Für die Berechnung der Optimierungsfunktionen sind neben den globalen Zielgrößengewichtungen ($h_{ZGi}$) spezifische Empfindlichkeiten ($wFG_{ZGi}$) der jeweiligen Führungsgrößen wichtig. Ähnlich wie die Zielgrößenbewertung ist es für die lokalen Empfindlichkeiten möglich, die Beziehung, wie stark eine Führungsgröße auf die Zielgrößen NOx- und Ruß-Emission einwirkt, anhand der physikalischen Zusammenhänge herzuleiten. Die Empfindlichkeitsbewertung der jeweiligen Führungsgrößen kann beispielsweise durch Messungen am Motorenprüfstand vorgenommen worden.

In den folgenden Ausführungsbeispielen wird auch eine Steuerung für einen Verbrennungsmotor beschrieben, die dazu ausgelegt ist, die beschriebenen Verfahren durchzuführen. Die Steuerung kann beispielsweise auf einer Kopplung zwischen einer bestehenden Motorsteuerung und einer Software bestehen, welche die beschriebenen Verfahren implementiert. Beispielsweise können über den Fahrerwunsch, der maßgeblich vom Fahrpedal beeinflusst wird, die Sollwerte für die Systemebene definiert werden. Hier kann neben dem Fahrerwunsch auch die aktuelle Drehzahl und die vom der Koordinationsebene (nicht abgebildet) definierte Betriebsart mit einfließen. Innerhalb der Systemebene können die Sollwerte von den unterlagerten Einstell- und Regelkreisen eingestellt bzw. eingeregelt werden.

**Integration in die bestehende Motorsteuerung**

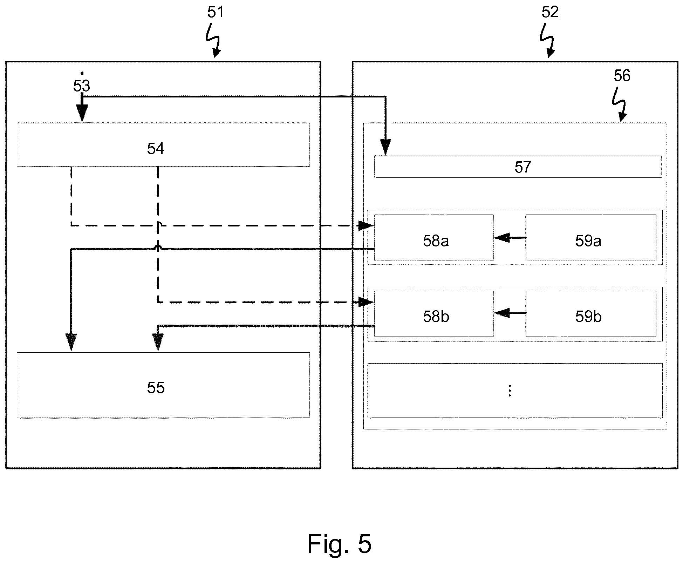

Fig. 5 zeigt ein Blockschaltbild eines Ausführungsbeispiels einer Kombination aus bestehender Motorsteuerung und der dynamischen Führung. Links ist das Motorsteuergerät 51 mit den wesentlichen Softwareebenen dargestellt. Rechts ist die Software 56 der dynamischen Führung aufgetragen, die in einer Hardware 52 implementiert ist, welche die Software ausführt. Über den Fahrerwunsch 53, der maßgeblich vom Fahrpedal beeinflusst wird, werden die Sollwerte 54 für die Systemebene 55 definiert. Hier kann neben dem Fahrerwunsch auch die aktuelle Drehzahl und die vom der Koordinationsebene (nicht abgebildet) definierte Betriebsart mit einfließen. Innerhalb der Systemebene 55 können die Sollwerte 54 von den unterlagerten Einstell- und Regelkreisen eingestellt bzw. eingeregelt werden.

Für jede ausgewählte Führungsgröße 59a, 59b kann das oben beschriebene Steuerungskonzept realisiert werden. Für jede der Führungsgrößen kann ein Koordinationsmodul 58a, 58b vorgesehen werden, bei dem der originale Sollwert 54 aus der Motorsteuerung und der angepasste dynamische Sollwert aus der dynamischen Führung eingeht. Durch die Aktivierungsbedingung 57 kann zwischen dem originalen und dem dynamisch angepassten Sollwert gewechselt werden. Der Ausgang der jeweiligen Koordinationsmodule 58a, 58b kann der Systemebene 55 in der Motorsteuerung 51 übergeben werden. Die Koordinationsebene kann beispielsweise als ein parametrierbarer Algorithmus, implementiert werden, der zwischen den Eingangswerten rampen kann.

**Aktivierungs- bzw. Deaktivierungskriterium**

Das Steuerungskonzept wirkt gemäß diesem Ausführungsbeispiel nur in einer dynamischen Systemphase. Es müssen somit gewisse Aktvierungs- bzw. Deaktivierungskriterium erfüllt werden, damit der Eingriff der Steuerung koordiniert wird.

Als Aktivierungs- bzw. Deaktivierungsbedingung kann das Sollmoment verwendet werden. Dieses leitet sich in diesem Ausführungsbeispiel aus der Fahrpedalstellung sowie der aktuellen Verbrennungsmotordrehzahl ab. Somit ist gewährleistet, dass der Fahrerwunsch die Steuerung aktiviert und nicht eine interne Logik bzw. Algorithmus der Verbrennungsmotorsteuerung. Es können aber auch andere Aktivierungsgrößen bzw. Betriebspunktzeiger gewählt werden. In einem Hybridkonzept kann beispielsweise auch die Momentenaufteilung zwischen E-Motor u. Verbrennungsmotor berücksichtigt werden. Auch können bei mengengeführten Systemen entsprechende Betriebspunktzeiger gewählt werden.

Das Aktivierungssignal kann über eine Filterfunktion angepasst werden und mithilfe von applizierbaren Schwellwerten und einer Hysterese ausgewertet werden. Dies vermeidet ein zu häufiges Hin-und-Herschalten der Steuerung. Ferner kann ein positiver Gradient des Sollmomentes ausgewertet werden. Hintergrund für dieses Kriterium ist, dass der Hauptanteil der Emission in dynamischen Phasen entsteht, wo sich das System zu einem höheren Lastpunkt hinbewegt.

Damit ein weicher Übergang der Führungsgrößen realisiert werden kann, kann für jede verwendete Führungsgröße ferner auch eine Rampenfunktion eingesetzt werden. Diese führt die dynamisch angepasste Führungsgröße und die stationär definierte Führungsgröße in einander über. Die Rampe wird über die Aktivierungsbedingung ausgelöst. Außerdem ist es möglich, die Rampenzeit für die Übergänge von stationärer zu dynamischer Führungsgröße bzw. zurück unterschiedlich zu parametrieren. Hiermit wird die Möglichkeit geschaffen, eine Führungsgröße schnell in den dynamischen Pfad zu leiten, wenn die Steuerung aktiviert wird und dann langsam wieder herauszuführen, wenn die dynamische Phase beendet wird.

**Bezugszeichenliste**

| | |
|---|---|
| 1 | Reihen-Vierzylinder Dieselmotor |
| 3 | integrierte Ladeluftkühlung |
| 5 | Zylinderdrucksensor |
| 7 | Common-Rail Einspritzsystem |
| 9 | Abgasturbolader mit variabler Turbinengeometrie |
| 11 | Hochdruck-Abgasrückführstrecke |
| 13 | Variabler-Ventiltrieb |
| 15 | Motor-Nahe-Abgasreinigungsanlage |
| 17 | Niederdruck-Abgasrückführstrecke |
| 19 | Motorsteuerung |
| 31 | Prädiktion |
| 32 | Limitierung |
| 32a | Basis-Limitierung |
| 32b | erweiterte Limitierung |
| 33 | Zielgrößenbewertung |
| 34 | Bestimmung der Optimierungsfunktion |
| 35 | Optimierung |
| 41 | System |
| 42 | Subsystem |
| 43a, b | Steuerung der Führungsgröße |
| 51 | Motorsteuergerät |
| 52 | Hardware für die Implementierung der dynamischen Führung |
| 53 | Fahrerwunsch |

54      Sollwerte der bestehenden Motorsteuerung

55      Systemebene

56      Software der dynamischen Führung

57      Aktivierungsbedingung

58a, 58b      Koordinationsmodul

59a, 59b      Steuerung der Führungsgröße

**Patentansprüche**

1. Verfahren zur dynamischen Steuerung von wenigstens einer Führungsgröße eines Verbrennungsmotors, bei dem ein Stellbereich ($\overrightarrow{FG}_{Prd}$) der Führungsgröße prädiziert wird, wobei im ermittelten Stellbereich ($\overrightarrow{FG}_{Prd}$) der Führungsgröße eine Zielgrößenbewertung ($\overrightarrow{ZG}_i$) erfolgt, und wobei eine Optimierung der Führungsgröße auf Basis der Zielgrößenbewertung ($\overrightarrow{ZG}_i$) erfolgt.

2. Verfahren nach Anspruch 1, bei dem gemäß eines Aktivierungskriteriums die dynamische Führung nur in einem dynamischen Betrieb des Verbrennungsmotors wirkt.

3. Verfahren nach Anspruch 1 oder 2, bei dem die Optimierung eine Zielgrößengewichtung ($w_{ZGi}$) umfasst.

4. Verfahren nach einem der Ansprüche 1 bis 3, bei dem auf Basis der jeweiligen Zielgrößenbewertung ($\overrightarrow{ZG}_i$) eine Optimierungsfunktion ($\overrightarrow{Opt}_{ZGi}$) für jede
Zielgröße formuliert wird und die jeweiligen Optimierungsfunktionen ($\overrightarrow{Opt}_{ZGi}$) zu einer Funktion ($\overrightarrow{Opt}$) verrechnet werden.

5. Verfahren nach einem der vorstehenden Ansprüche, bei dem globale Optimierungsziele ($h_{ZGi}$), die nicht mit einander verkoppelt sind, definiert werden, sowie lokale Führungsgrößengewichtungen ($wFG_{ZGi}$) für jede Führungsgröße individuell definiert werden, und Optimierungszielwerte ($g_{ZGi}$)einer betrachteten Führungsgröße auf Basis der globalen Optimierungsziele ($h_{ZGi}$) und der lokalen Führungsgrößengewichtungen ($wFG_{zci}$) berechnet werden.

6. Verfahren nach einem der vorstehenden Ansprüche, bei dem die Führungsgrößen auf Basis eines linearen Modells bewertet werden.

7. Verfahren nach einem der vorstehenden Ansprüche, bei dem eine Limitierung der Stellbereiche ($\overrightarrow{FG}_{Prd}$) erfolgt, um limitierte Stellbereiche ($\overrightarrow{FG}_{Lim}$, $\overrightarrow{FG}_{LimErw}$) zu ermitteln.

8. Steuerung für einen Verbrennungsmotor, die dazu ausgelegt ist, das Verfahren nach einem der vorstehenden Ansprüche durchzuführen.

**Claims**

1. Method for dynamically controlling at least one reference variable of an internal combustion engine, in which a control range ($\overrightarrow{FG}_{Prd}$) of the reference variable is predicted, wherein a target variable evaluation ($\overrightarrow{ZG}_i$) is carried out in the determined control range ($\overrightarrow{FG}_{Prd}$) of the reference variable, and wherein an optimization of the reference variable is carried out on the basis of the target variable evaluation ($\overrightarrow{ZG}_i$).

2. Method according to Claim 1, wherein, in accordance with an activation criterion, the dynamic guidance acts only in a dynamic operation of the internal combustion engine.

3. Method according to Claims 1 or 2, in which the optimization comprises a target variable weighting ($w_{ZGi}$).

4. Method according to any one of Claims 1 to 3, wherein, on the basis of the respective target variable evaluation ($\overrightarrow{ZG}_i$) an optimization function ($\overrightarrow{Opt}_{ZGi}$) for each target variable is formulated and the respective optimization functions ($\overrightarrow{Opt}_{ZGi}$) are calculated to form a function ($\overrightarrow{Opt}$).

**5.** Method according to any one of the preceding claims, wherein global optimization objectives ($h_{ZGi}$) which are not coupled with each other are defined, and also local reference variable weightings ($wFG_{ZGi}$) are defined individually for each reference variable, and optimization target values ($g_{ZGi}$)of a considered reference variable are calculated on the basis of the global optimization targets ($h_{ZGi}$) and the local reference variable weightings ($wFG_{ZGi}$).

**6.** Method according to any one of the preceding claims, wherein the reference variables are evaluated on the basis of a linear model.

**7.** Method according to any one of the preceding claims, wherein the setting ranges ($\overrightarrow{FG}_{Prd}$) are limited in order to determine limited setting ranges ($\overrightarrow{FG}_{Lim}$, $\overrightarrow{FG}_{LimErw}$).

**8.** Control unit for an internal combustion engine designed to carry out the method according to any one of the preceding claims.

**Revendications**

**1.** Procédé de commande dynamique d'au moins une grandeur de référence d'un moteur à combustion interne, dans lequel une plage de réglage ($\overrightarrow{FG}_{Prd}$) de la grandeur de référence est prédite, une évaluation de valeur cible ($\overrightarrow{ZG}_i$) étant effectuée dans la plage de réglage ($\overrightarrow{FG}_{Prd}$) déterminée de la grandeur de référence et une optimisation de la grandeur de référence étant effectuée sur la base de l'évaluation de la valeur cible ($\overrightarrow{ZG}_i$).

**2.** Procédé selon la revendication 1, dans lequel, conformément à un critère d'activation, le guidage dynamique n'agit que dans une plage dynamique du moteur à combustion interne.

**3.** Procédé selon la revendication 1 ou 2, dans lequel l'optimisation comprend une pondération de valeur cible ($w_{ZGi}$).

**4.** Procédé selon l'une quelconque des revendications 1 à 3, dans lequel, sur la base de l'évaluation de valeur cible ($\overrightarrow{ZG}_i$) respective, une fonction d'optimisation ($\overrightarrow{Opt}_{ZGi}$) est formulée pour chaque valeur cible et les fonctions d'optimisation ($\overrightarrow{Opt}_{ZGi}$) respectives sont réunies en une fonction ($\overrightarrow{Opt}$).

**5.** Procédé selon l'une quelconque des revendications précédentes, dans lequel des objectifs d'optimisation ($h_{ZGi}$) globaux, qui ne sont pas couplés les uns aux autres, sont définis et des pondérations de grandeurs de référence ($wFG_{ZGi}$) locales sont définies individuellement pour chaque grandeur de référence et des valeurs cibles d'optimisation ($g_{ZGi}$)d'une grandeur de référence considérée sont calculées sur la base des objectifs d'optimisation ($h_{ZGi}$) globaux et des pondérations de grandeurs de référence ($wFG_{zci}$) locales.

**6.** Procédé selon l'une quelconque des revendications précédentes, dans lequel les grandeurs de référence sont évaluées sur la base d'un modèle linéaire.

**7.** Procédé selon l'une quelconque des revendications précédentes, dans lequel une limitation de la plage de réglage ($\overrightarrow{FG}_{Prd}$) a lieu, pour déterminer des plages de réglages limitées ($\overrightarrow{FG}_{Lim}$, $\overrightarrow{FG}_{LimErw}$).

**8.** Commande d'un moteur à combustion interne, qui est conçue pour exécuter le procédé selon l'une quelconque des revendications précédentes.

Fig. 1a

Fig. 1b

Fig. 2a

Fig. 2b

Fig. 2c

Fig. 2d

Fig. 2e

Fig. 2f

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006007122 A1
- DE 10321192 A1

- DE 102013209037 A1

**In der Beschreibung aufgeführte Nicht-Patentliteratur**

- **SAHIN, I.** *Random Lines: A Novel Population Set-Based Evolutionary Global Optimization Algorithm in Genetic Programming,* 2011